# EUROPEAN PATENT APPLICATION

(11) **EP 2 463 810 A1**
(43) Date of publication of application: **13.06.2012**
(21) Application number: 11006281.7
(22) Date of filing: 29.07.2011
(51) Int. Cl.: G06Q 10/00

(54) **Data extraction framework**

(30) Priority: 09.12.2010 US 964306
(71) Applicant: SAP Portals Israel Ltd., 43665 Ra'anana (IL)
(72) Inventor: Yassin, Ohad, 69190 Walldorf (DE); Kravets, Pavel, 69190 Walldorf (DE); Hafzadi, Nisim, 69190 Walldorf (DE); Alon, Ram, 69190 Walldorf (DE)
(74) Representative: Müller-Boré & Partner Patentanwälte

(57) **Abstract**

The present disclosure involves systems, software, and computer implemented methods for providing a data extraction framework for extracting data and metadata from an application to provide additional functionality for the extracted data and metadata. One process includes operations for identifying a first application for data extraction and determining a set of data suitable for extraction from the first application using a software development kit associated with the first application. The set of data is stored in a repository without storing visualization components of the first application in the repository. The set of data is sent to a second application for further processing of the set of data. The second application is configured to bind different visualization components to the set of data for display of data elements in the set of data to a user.

## Description

### TECHNICAL FIELD

The present disclosure relates to software, computer systems, and computer implemented methods for providing a data extraction framework.

### BACKGROUND

Users of different applications may need to aggregate the different applications into a shared user interface (UI) structure, such as a shared page or workspace. For example, aggregation of different applications into a shared UI structure may be a common task in the UI composition domain of a UI solution. Typically, a user can add an application from one or more repositories into the common UI structure. In some implementations, the UI solution can allow the user to map the relations between the applications that are executed side by side. A common implementation of the mapping functionality can include a mashup framework allowing users to arrange various applications in a common workspace. Generally, however, users may not have access to the data or metadata consumed by the different applications. Accordingly, the user cannot customize the visualization of applications within the shared UI structure apart from the limitations of the rendering tools and technology provided with the applications. Instead, the visualization features of the applications are determined by the application associated with each feature and may not be modified by the user. Further, data contained in the original applications may not be compatible with functions provided by other applications.

### SUMMARY

The present disclosure describes techniques for providing a data extraction framework for extracting data and metadata from an application to provide additional functionality for the extracted data and metadata. A computer program product is encoded on a tangible storage medium, where the product comprises computer readable instructions for causing one or more processors to perform operations. These operations can include identifying a first application for data extraction and determining a set of data suitable for extraction from the first application using a software development kit associated with the first application. The set of data is stored in a repository without storing visualization components of the first application in the repository. The set of data is sent to a second application for further processing of the set of data.

While generally described as computer implemented software embodied on tangible, non-transitory media that processes and transforms the respective data, some or all of the aspects may be computer implemented methods or further included in respective systems or other devices for performing this described functionality. The details of these and other aspects and embodiments of the present disclosure are set forth in the accompanying drawings and the description below. Other features, objects, and advantages of the disclosure will be apparent from the description and drawings, and from the claims.

### DESCRIPTION OF DRAWINGS

FIGURE 1 illustrates an example environment for providing a data extraction framework;

FIGURE 2 illustrates a diagram of example components for providing a data extraction framework using an appropriate system, such as the system described in FIGURE 1; and

FIGURE 3 is a flowchart of the data extraction process using an appropriate system, such as the system described in FIGURE 1.

### DETAILED DESCRIPTION

This disclosure generally describes computer systems, software, and computer implemented methods for providing a data extraction framework for separating data and metadata from the UI composition domain of applications. In some instances, different applications can be included in a shared UI structure, such as in a mashup scenario, for example. A user may want to use the underlying data and metadata of a particular application in the shared UI structure but apply a different interface or visualization for the application. The data and metadata can be extracted from the application and sent to a separate visualization engine to render a different user interface for the data and metadata.

In some implementations, a common model representing data and metadata is defined. The model can include data and metadata extracted from the original application. Further, the model can have different layers representing the original UI layout, a snapshot of the data in the original application, and an interface for retrieving updated data. A data extraction framework can be implemented to accept the model, extract data, and index the data for future searches and other uses. The data and metadata between applications can be manipulated and federated, such as creating mashups of the data, filtering the data, defining multi-dimensional facets of the data, and other functions. The data can also be directed into a common visualization engine or other client. Accordingly, a custom UI can be provided on top of the indexed content that is harmonized with other application UIs in the shared UI structure. Still further, the custom UI can be defined to meet the needs of a specific user scenario.

After the data from the original application is associated with other applications in the shared UI structure, data flows between the different applications can also be given contextual meaning. The time in which data is transferred between the data source and the visualization layer is controlled, and filtering can be automatically suggested to an end user.

One potential benefit of the data extraction framework for separating data and metadata ("data/metadata") from the UI composition domain of applications is that the data/metadata layer of an original application can be separated from the visualization layer. Accordingly, the separated data/metadata can be used for other functions and applications within the shared UI structure. A customized UI can be automatically rendered in association with the data/metadata of the original application in place of the standard UI interface in the original application. The customized UI can allow for consistent visualization among applications sharing a common context, such as applications found in the same web page or workspace or applications associated with a common user business scenario, for example.

Another potential benefit of the data extraction framework for separating data/metadata from the UI domain of an application is that different applications can be used to perform various tasks on the data/metadata that were not available in the original application. Thus, an original application's data/metadata can be used with different visualization elements as well as different functionality. For example, a list of data in the original application can be extracted and additional tasks can be performed on the list of data to expand the user's options with respect to the data. In some instances, data associated with an original application can be used with functionality provided by other applications, even if the other applications originate from a different source or were previously incompatible with the original application. Accordingly, data from different sources and applications can be collected and integrated with particular applications that provide functionality not previously available for the collected data.

The extraction of data/metadata from an original application allows for numerous options for enriching current applications. Decision-making frameworks can be enhanced by collecting data from different sources (that were previously incompatible) and incorporating the collected data into manual or automatic decision-making processes. Further, the data extraction framework can provide automatic data suggestions for a user scenario that incorporates a plurality of applications contained in the shared UI structure. Multi-dimensional views on data related to all applications or automatic query and filters on data related to all applications can also be provided. Still further, porting of the original application to mobile devices can be performed.

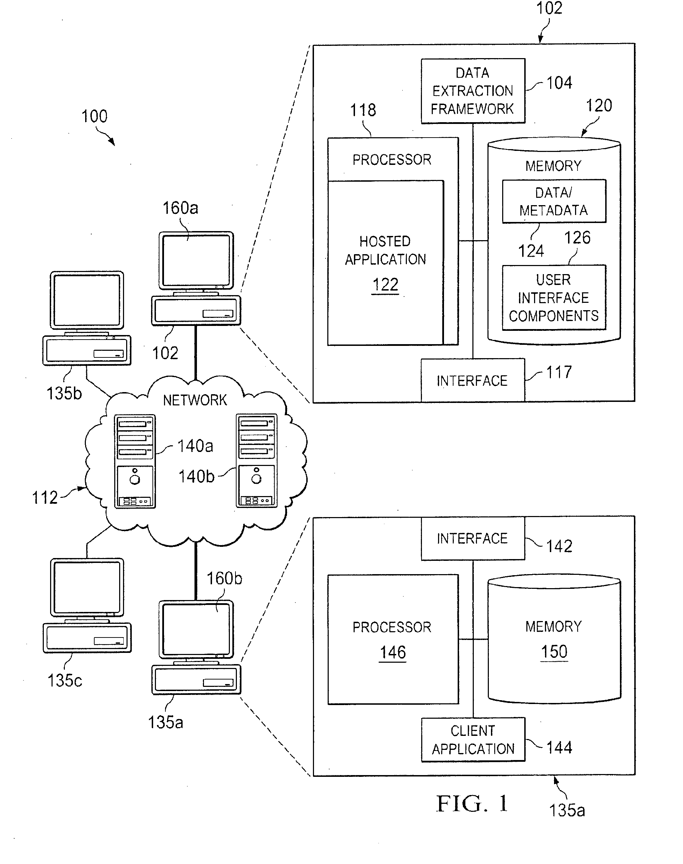

Turning to the illustrated example, FIGURE 1 illustrates an example environment 100 for providing a data extraction framework 104 for separating a visualization layer from a data/metadata layer of an application. The illustrated environment 100 includes or is communicably coupled with one or more clients 135 and servers 102, at least some of which communicate across network 112. In general, environment 100 depicts an example configuration of a system capable of extracting data/metadata from an original application and directing the data/metadata to visualization tools that were not previously available in the original application. In some implementations, the data extraction framework 104 for separating the visualization layer from the data/metadata layer can be implemented as a hosted application on a server, such as server 102, accessible to a user at client 135a through a network 112. In certain instances, clients 135a-c and server 102 can be logically grouped and accessible within a cloud computing network. Accordingly, the system may be provided as an on-demand solution through the cloud computing network as well as a traditional server-client system or a local application at client 135a. Alternatively, the data extraction framework 104 may be provided through a traditional server-client implementation or locally at client 135a without the need for accessing a hosted application through network 112.

In general, server 102 is any server that stores one or more hosted applications 122, where at least a portion of the hosted applications are executed via requests and responses sent to users or clients within and communicably coupled to the illustrated environment 100 of FIGURE 1. For example, server 102 may be a Java 2 Platform, Enterprise Edition (J2EE)-compliant application server that includes Java technologies such as Enterprise JavaBeans (EJB), J2EE Connector Architecture (JCA), Java Messaging Service (JMS), Java Naming and Directory Interface (JNDI), and Java Database Connectivity (JDBC). In some instances, the server 102 may store a plurality of various hosted applications 122, while in other instances, the server 102 may be a dedicated server meant to store and execute only a single hosted application 122. In some instances, the server 102 may comprise a web server or be communicably coupled with a web server, where the hosted applications 122 represent one or more web-based applications accessed and executed via network 112 by clients 135 of the system to perform the programmed tasks or operations of the hosted application 122.

At a high level, the server 102 comprises an electronic computing device operable to receive, transmit, process, store, or manage data and information associated with the environment 100. The server 102 illustrated in FIGURE 1 can be responsible for receiving application requests from one or more client applications or business applications associated with clients 135 of environment 100, responding to the received requests by processing said requests in the associated hosted application 122, and sending the appropriate response from the hosted application 122 back to the requesting client application. The server 102 may also receive requests and respond to requests from other components on network 112. Alternatively, the hosted application 122 at server 102 can be capable of processing and responding to requests from a user locally accessing server 102. Accordingly, in addition to requests from the external clients 135 illustrated in FIGURE 1, requests associated with the hosted applications 122 may also be sent from internal users, external or third-party customers, other automated applications, as well as any other appropriate entities, individuals, systems, or computers. Further, the terms "client application" and "business application" may be used interchangeably as appropriate without departing from the scope of this disclosure.

As used in the present disclosure, the term "computer" is intended to encompass any suitable processing device. For example, although FIGURE 1 illustrates a single server 102, environment 100 can be implemented using one or more servers 102, as well as computers other than servers, including a server pool. Indeed, server 102 and client 135 may be any computer or processing device such as, for example, a blade server, general-purpose personal computer (PC), Macintosh, workstation, UNIX-based workstation, or any other suitable device. In other words, the present disclosure contemplates computers other than general purpose computers, as well as computers without conventional operating systems. Further, illustrated server 102 and client 135 may be adapted to execute any operating system, including Linux, UNIX, Windows, Mac OS, or any other suitable operating system. According to one implementation, server 102 may also include or be communicably coupled with a mail server.

In the present implementation, and as shown in FIGURE 1, the server 102 includes a processor 118, an interface 117, a memory 120, and one or more hosted applications 122. The interface 117 is used by the server 102 for communicating with other systems in a client-server or other distributed environment (including within environment 100) connected to the network 112 (e.g., clients 135, as well as other systems communicably coupled to the network 112). Generally, the interface 117 comprises logic encoded in software and/or hardware in a suitable combination and operable to communicate with the network 112. More specifically, the interface 117 may comprise software supporting one or more communication protocols associated with communications such that the network 112 or interface's hardware is operable to communicate physical signals within and outside of the illustrated environment 100.

The server 102 may also include a user interface, such as a graphical user interface (GUI) 160a. The GUI 160a comprises a graphical user interface operable to, for example, allow the user of the server 102 to interface with at least a portion of the platform for any suitable purpose, such as creating, preparing, requesting, or analyzing data, as well as viewing and accessing source documents associated with business transactions. Generally, the GUI 160a provides the particular user with an efficient and user-friendly presentation of business data provided by or communicated within the system. The GUI 160a may comprise a plurality of customizable frames or views having interactive fields, pull-down lists, and buttons operated by the user. For example, GUI 160a may provide interactive elements that allow a user to select from a list of suggested entries for input into a data field displayed in GUI 160a. More generally, GUI 160a may also provide general interactive elements that allow a user to access and utilize various services and functions of application 122. The GUI 160a is often configurable, supports a combination of tables and graphs (bar, line, pie, status dials, etc.), and is able to build real-time portals, where tabs are delineated by key characteristics (e.g. site or micro-site). Therefore, the GUI 160a contemplates any suitable graphical user interface, such as a combination of a generic web browser, intelligent engine, and command line interface (CLI) that processes information in the platform and efficiently presents the results to the user visually.

Generally, example server 102 may be communicably coupled with a network 112 that facilitates wireless or wireline communications between the components of the environment 100 (i.e., between the server 102 and clients 135), as well as with any other local or remote computer, such as additional clients, servers, or other devices communicably coupled to network 112 but not illustrated in FIGURE 1. In the illustrated environment, the network 112 is depicted as a single network in FIGURE 1, but may be a continuous or discontinuous network without departing from the scope of this disclosure, so long as at least a portion of the network 112 may facilitate communications between senders and recipients. The network 112 may be all or a portion of an enterprise or secured network, while in another instance at least a portion of the network 112 may represent a connection to the Internet. In some instances, a portion of the network 112 may be a virtual private network (VPN), such as, for example, the connection between the client 135 and the server 102. Further, all or a portion of the network 112 can comprise either a wireline or wireless link. Example wireless links may include 802.11a/b/g/n, 802.20, WiMax, and/or any other appropriate wireless link. In other words, the network 112 encompasses any internal or external network, networks, sub-network, or combination thereof operable to facilitate communications between various computing components inside and outside the illustrated environment 100. The network 112 may communicate, for example, Internet Protocol (IP) packets, Frame Relay frames, Asynchronous Transfer Mode (ATM) cells, voice, video, data, and other suitable information between network addresses. The network 112 may also include one or more local area networks (LANs), radio access networks (RANs), metropolitan area networks (MANs), wide area networks (WANs), all or a portion of the Internet, and/or any other communication system or systems at one or more locations. The network 112, however, is not a required component of the present disclosure, and the elements hosted by the server 102, such as the data extraction framework 104, may be implemented locally at a client 135 or locally at server 102.

Clients 135a-c may have access to resources such as server 102 within network 112. In certain implementations, the servers within the network 112, including server 102 in some instances, may comprise a cloud computing platform for providing cloud-based services. The terms "cloud," "cloud computing," and "cloud-based" may be used interchangeably as appropriate without departing from the scope of this disclosure. Cloud-based services can be hosted services that are provided by servers 140a, 140b, or 102 and delivered across a network to a client platform to enhance, supplement, or replace applications executed locally on a client computer. Clients 135a-c can use cloud-based services to quickly receive software upgrades, applications, and other resources that would otherwise require a lengthy period of time before the resources can be delivered to the clients 135a-c. Additionally, other devices may also have access to cloud-based services, such as on-demand services provided by servers accessible through network 112.

As described in the present disclosure, on-demand services can include multiple types of services such as products, actionable analytics, enterprise portals, managed web content, composite applications, or capabilities for creating, integrating, using and presenting business applications. For example, a cloud-based implementation can allow client 135 to transparently upgrade from an older user interface platform to newer releases of the platform without loss of functionality. In certain implementations, data/metadata is separated from the visualization layer of a particular application using services provided through the cloud network. The data/metadata can then be used in connection with other visualization tools so that a new UI layout can replace the original UI layout of the application. Further, other processes can be performed on the separated data/metadata, such as providing additional functionality to be performed on a list of extracted data.

As illustrated in FIGURE 1, server 102 includes a processor 118. Although illustrated as a single processor 118 in FIGURE 1, two or more processors may be used according to particular needs, desires, or particular embodiments of environment 100. Each processor 118 may be a central processing unit (CPU), a blade, an application specific integrated circuit (ASIC), a field-programmable gate array (FPGA), or another suitable component. Generally, the processor 118 executes instructions and manipulates data to perform the operations of server 102 and, specifically, the one or more plurality of hosted applications 122. Specifically, the server's processor 118 executes the functionality required to receive and respond to requests from the clients 135a-c and their respective client applications 144, as well as the functionality required to perform the other operations of the hosted application 122.

Regardless of the particular implementation, "software" may include computer-readable instructions, firmware, wired or programmed hardware, or any combination thereof on a tangible, non-transitory, medium operable when executed to perform at least the processes and operations described herein. Indeed, each software component may be fully or partially written or described in any appropriate computer language including C, C++, Java, Visual Basic, assembler, Perl, any suitable version of 4GL, as well as others. It will be understood that while portions of the software illustrated in FIGURE 1 are shown as individual modules that implement the various features and functionality through various objects, methods, or other processes, the software may instead include a number of sub-modules, third party services, components, libraries, and such, as appropriate. Conversely, the features and functionality of various components can be combined into single components as appropriate. In the illustrated environment 100, processor 118 executes one or more hosted applications 122 on the server 102.

At a high level, each of the one or more hosted applications 122 is any application, program, module, process, or other software that may execute, change, delete, generate, or otherwise manage information according to the present disclosure, particularly in response to and in connection with one or more requests received from the illustrated clients 135a-c and their associated client applications 144 or from other servers or components through a network 112. In certain cases, only one hosted application 122 may be located at a particular server 102. In others, a plurality of related and/or unrelated hosted applications 122 may be stored at a single server 102, or located across a plurality of other servers 102, as well. In certain cases, environment 100 may implement a composite hosted application 122. For example, portions of the composite application may be implemented as Enterprise Java Beans (EJBs) or design-time components may have the ability to generate run-time implementations into different platforms, such as J2EE (Java 2 Platform, Enterprise Edition), ABAP (Advanced Business Application Programming) objects, or Microsoft's .NET, among others.

Additionally, the hosted applications 122 may represent web-based applications accessed and executed by remote clients 135a-c or client applications 144 via the network 112 (e.g., through the Internet). Further, while illustrated as internal to server 102, one or more processes associated with a particular hosted application 122 may be stored, referenced, or executed remotely. For example, a portion of a particular hosted application 122 may be a web service associated with the application that is remotely called, while another portion of the hosted application 122 may be an interface object or agent bundled for processing at a remote client 135. Moreover, any or all of the hosted applications 122 may be a child or sub-module of another software module or enterprise application (not illustrated) without departing from the scope of this disclosure. Still further, portions of the hosted application 122 may be executed by a user working directly at server 102, as well as remotely at client 135.

As illustrated, processor 118 can also execute a data extraction framework 104 that provides services for separating a visualization layer from a data/metadata layer of an application. The data extraction framework 104 is a software framework used to separate data/metadata from the composition of an original application in order to redirect the data/metadata to different visualization engines as well as use the data/metadata. Accordingly, an original user interface associated with an application can be replaced with a newer user interface not previously available to the application. In some implementations, the data extraction framework 104 can be executed by a different processor or server external to server 102, such as by a server communicably coupled to server 102 through network 112. For example, the services provided by the data extraction framework 104 may be provided as an on-demand service through a cloud computing network, as a web service accessible via network 112, or as a service provided on a dedicated and/or on-premise server. Further, although the data extraction framework 104 is illustrated as a single module executed by processor 118, the data extraction framework 104 can also include one or more repositories, indexes, libraries, interfaces, applications, or other components needed to implement the functionality provided by the data extraction framework 104. Accordingly, the data extraction framework 104 can provide interfaces, modules, services, or metadata definitions that enable hosted application 122 or client application 144 to use the underlying data and metadata (data/metadata) from one application and apply a new UI layout on top of the data/metadata or apply new functionality associated with other applications to the data/metadata.

In some implementations, the data extraction framework 104 is implemented to enhance a mashup environment. In general, a mashup environment may comprise an environment in which applications, modules, or functions called mashup components can be used in connection with other applications in a flexible manner based on a user's customization and arrangement of the applications. A mashup component can be a webpage, application, or part of an application such as a module, component, service, or subroutine that contains data or functionality that can be combined with another application or component, such as another mashup component, based on a user's preferences. In some mashup scenarios, a page or workspace can have a layout used to define the visual arrangement of mashup applications in the workspace.

Further, the mashup applications can interact with each other, such as by passing content between mashup applications. In particular, a mashup application can be combined with other mashup applications through data flows connecting input and output ports of the applications as defined by the user. In a mashup environment, mashup applications arranged in a particular format can be rearranged in different combinations, resulting in different data flows and connections between elements of the mashup applications. A mashup application can be linked with other applications through ports, such as input or output ports which allow data to be shared among various applications. A user can customize the arrangement of mashup components according to the user's preferences.

The data extraction framework 104 can provide services for "removing" the visualization elements associated with a particular application and outputting a different UI layout with different visualization elements for the same underlying data/metadata used in the same application. For example, a user working in a mashup environment consisting of a plurality of applications can identify a new application to be included in the mashup environment. The user can add the new application (using, e.g., drag-and-drop operations) into a shared workspace comprising the mashup environment. The user, however, may want to work with the data in the new application using visual elements associated with the other applications currently present in the mashup environment. The data extraction framework 104 can separate the data/metadata associated with the new application from the visualization layer of the new application and apply a different visualization scheme to the data/metadata. In some instances, the new visualization scheme can consist of UI components specifically identified based on the user's current business scenario or on the level of conformity with other applications in the mashup environment.

The data extraction framework 104 can also provide a number of other services with respect to the extracted data/metadata. In the present example, the data extraction framework 104 can also map data fields and structures in the extracted data/metadata with components associated with the other applications in the mashup environment. Accordingly, new applications can be easily integrated with other mashup applications in a shared workspace in a mashup environment. Further, the new application can include an additional set of functions that can be performed on the data/metadata associated with the new application. The data extraction framework 104 can transform data objects in a first format associated with the original application into a different, second format associated with one or more other applications so that additional functionality provided by the other applications can be applied to the extracted data/metadata. For example, using the scenario presented above, the new application can provide a list of data, and data extraction framework 104 can transform the list of data into a format accessible to other applications so that the other applications can analyze the list of data.

Still further, additional functionality provided by the data extraction framework 104 can include search-related features. For example, the extracted data/metadata, as well as any data from the applications in a shared workspace, can be indexed for future searching. Accordingly, multi-dimensional views can be automatically provided for data across multiple applications. In some implementations, automatic queries and filters can also be included to focus search results on a specific portion of data in the multiple applications.

In general, the server 102 also includes memory 120 for storing data and program instructions. Memory 120 may include any memory or database module and may take the form of volatile or non-volatile memory including, without limitation, magnetic media, optical media, random access memory (RAM), read-only memory (ROM), removable media, or any other suitable local or remote memory component. Memory 120 may store various objects or data, including classes, frameworks, applications, backup data, business objects, jobs, web pages, web page templates, database tables, repositories storing business and/or dynamic information, and any other appropriate information including any parameters, variables, algorithms, instructions, rules, constraints, or references thereto associated with the purposes of the server 102 and its one or more hosted applications 122.

Memory 120 can also store data objects such as the data/metadata 124 associated with certain applications. The data/metadata 124 can be business objects, data structures, tables, data fields, metadata, configuration data, or any other data associated with an application that can be extracted using the data extraction framework 104. In some implementations, memory 120 can also store user interface (UI) components 126 associated with the data/metadata 124. UI components 126 can be visualization elements that are used by data extraction framework 104 to render a new UI layout for data/metadata 124 that has been extracted from an original application.

The illustrated environment of FIGURE 1 also includes one or more clients 135. Each client 135 may be any computing device operable to connect to or communicate with at least the server 102 and/or via the network 112 using a wireline or wireless connection. Further, as illustrated in FIGURE 1, client 135a includes a processor 146, an interface 142, a graphical user interface (GUI) 160b, a client application 144, and a memory 150. In general, client 135a comprises an electronic computer device operable to receive, transmit, process, and store any appropriate data associated with the environment 100 of FIGURE 1. It will be understood that there may be any number of clients 135 associated with, or external to, environment 100. For example, while illustrated environment 100 includes client 135a, alternative implementations of environment 100 may include multiple clients communicably coupled to the server 102, or any other number of clients suitable to the purposes of the environment 100. Additionally, there may also be one or more additional clients 135 external to the illustrated portion of environment 100 that are capable of interacting with the environment 100 via the network 112. Further, the term "client" and "user" may be used interchangeably as appropriate without departing from the scope of this disclosure. The term "client" may also refer to any computer, application, or device, such as a mobile device, that is communicably coupled to one or more servers through a network 112. Moreover, while each client 135 is described in terms of being used by a single user, this disclosure contemplates that many users may use one computer, or that one user may use multiple computers.

The GUI 160b associated with client 135a comprises a graphical user interface operable to, for example, allow the user of client 135a to interface with at least a portion of the platform for any suitable purpose, such as creating, preparing, requesting, or analyzing data, as well as viewing and accessing source documents associated with business transactions. Generally, the GUI 160b provides the particular user with an efficient and user-friendly presentation of business data provided by or communicated within the system. The GUI 160b may comprise a plurality of customizable frames or views having interactive fields, pull-down lists, and buttons operated by the user. In particular, GUI 160b may display a visual representation of UI components 126 to a user for data/metadata 124 that has been extracted from an application. More generally, GUI 160b may also provide general interactive elements that allow a user to access and utilize various services and functions of application 144. The GUI 160b is often configurable, supports a combination of tables and graphs (bar, line, pie, status dials, etc.), and is able to build real-time portals, where tabs are delineated by key characteristics (e.g. site or micro-site). Therefore, the GUI 160b contemplates any suitable graphical user interface, such as a combination of a generic web browser, intelligent engine, and command line interface (CLI) that processes information in the platform and efficiently presents the results to the user visually.

As used in this disclosure, client 135 is intended to encompass a personal computer, touch screen terminal, workstation, network computer, kiosk, wireless data port, smart phone, personal data assistant (PDA), one or more processors within these or other devices, or any other suitable processing device. For example, each client 135 may comprise a computer that includes an input device, such as a keypad, touch screen, mouse, or other device that can accept user information, and an output device that conveys information associated with the operation of the server 102 (and hosted application 122) or the client 135 itself, including digital data, visual information, the client application 144, or the GUI 160b. Both the input and output device may include fixed or removable storage media such as a magnetic storage media, CD-ROM, or other suitable media to both receive input from and provide output to users of client 135 through the display, namely, the GUI 160b.

While FIGURE 1 is described as containing or being associated with a plurality of elements, not all elements illustrated within environment 100 of FIGURE 1 may be utilized in each alternative implementation of the present disclosure. For example, although FIGURE 1 depicts a server-client environment implementing a hosted application at server 102 that can be accessed by client computer 135, in some implementations, server 102 executes a local application that features an application UI accessible to a user directly utilizing GUI 160a. Further, although FIGURE 1 depicts a server 102 external to network 112, server 102 may be included within the network 112 as part of an on-demand context solution, for example. Additionally, one or more of the elements described herein may be located external to environment 100, while in other instances, certain elements may be included within or as a portion of one or more of the other described elements, as well as other elements not described in the illustrated implementation. Further, certain elements illustrated in FIGURE 1 may be combined with other components, as well as used for alternative or additional purposes in addition to those purposes described herein.

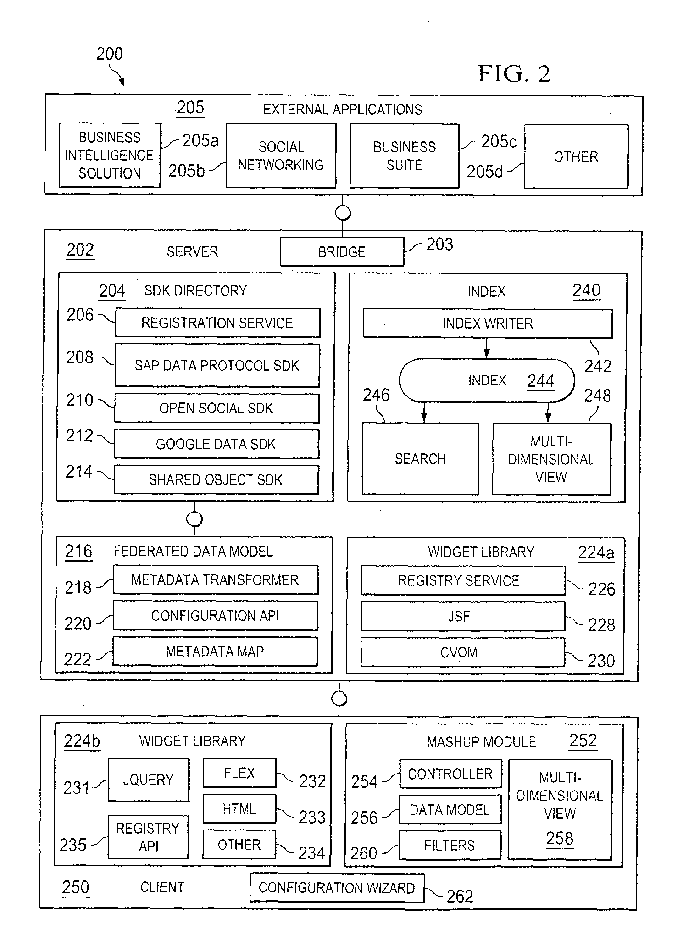

FIGURE 2 illustrates an example architecture 200 of some of the components used to implement the data extraction framework 104. As depicted in FIGURE 2, the architecture 200 can include a server 202 communicably coupled to a client 250. A number of external applications 205 can also be communicably coupled with the server 202. In some instances, the external applications 205 are applications that can include components that are "consumed" by the data extraction framework 104 and inserted into a shared workspace. Examples of the external applications 205 can include Business Intelligence (BI) solutions 205a, applications used for social networking 205b, business suite applications 205c, and other applications 205d.

Although the external applications 205 are depicted in FIGURE 2 as being located external to server 202, the external applications 205 can be provided using any suitable means, including as an on-demand service through a cloud network, as an on-premise service, locally at server 202, or remotely through a network. In some implementations, a bridge 203 can be incorporated into the server 202 as an interface between the external applications 205 and the server 202 and used to invoke the external applications 205. The bridge 203 can be used to prepare invocation methods and properties related to applications that are initiated by the bridge 203, including applications that reside locally or remotely with respect to the server 202. For example, the bridge 203 can provide the necessary logic to launch different applications such as a Business Intelligence Web Intelligent (WEBI) application. The bridge 203 can perform various tasks associated with the WEBI application, including building a uniform resource identifier (URI) to the WEBI application, providing relevant parameters, and configuring an HTTP method to access the WEBI application. In some instances, the bridge 203 provides an interface to different applications associated with different protocols.

Consumption of the external applications 205 can be accomplished using various data protocols or data models associated with each of the applications 205. The application data model can define the structure of data used in a particular application, the options for accessing the data, and the representation of objects associated with the application. For example, consuming social networking applications may be accomplished using the Open Social application programming interfaces (API), which allow social software applications to access data and core functions of certain social networks.

A software development kit (SDK) repository 204 can be implemented at server 202. The SDK repository 204 includes the data models and protocols of one or more of the applications that may be consumed in or by the data extraction framework 104. In some implementations, the SDK repository 204 can store data models and software development kits (SDK) associated with commonly-used applications. Examples of SDKs stored in the SDK repository 204 include the Google Data software development kit (SDK) 212, the shared object SDK 214, the Open Social SDK 210, and the SAP Data Protocol SDK 208, among other data models. The SDK repository 204 can be populated by accessing the data structure of an underlying application, extracting data from the application, parsing the data, processing the content, and identifying data/metadata and UI elements in the data model associated with the application. The SDK repository 204 can then direct the data/metadata to an appropriate post-processing algorithm for further processing. Still further, the SDK repository 204 can be implemented as a fully extensible and customizable repository for application data models. Accordingly, a registration service 206 can be provided in the SDK repository 204 to register and install new data models as necessary.

After the data models are passed through the SDK directory 204, a federated data model module 216 can be used to perform certain tasks on the data models. In some implementations, a metadata mapping application 222 can be used to automatically map data from a first application to data from one or more other applications. For example, the first application may be identified for inclusion in a shared workspace with other applications in a mashup scenario. The first application may contain a table storing the email identification information of different users. The table and the individual email identification for a particular user may then be mapped to a second application associated with the user, such as a social networking application, for example. Accordingly, the metadata mapping application 222 can perform logical wiring between applications (here, the first and second applications) based on common attributes found or identified in the data/metadata extracted and stored in the federated data model 216. In some instances, all applications contained in a shared workspace are connected via logical wiring by the metadata mapping application 222.

The federated data model module 216 can include additional functionality to facilitate logical wiring between applications. For example, the metadata mapping application 222 can perform "smart" wiring between data components. In some instances, data fields associated with one application are logically related to data fields in other applications but may, for example, be labeled using different terminology. Based on the data models in the SDK repository 204, metadata transformer 218 can identify similarities between the data fields despite the different labels and form logical wiring to connect the data fields that should be connected in each application. Further, a configuration API 220 can allow users to interrupt or make manual changes to the automatic wiring performed by the federated data module 216.

In certain implementations, a metadata transformer 218 is also included in the federated data module 216. The metadata transformer 218 can be configured to translate a data model from a format associated with one application to a different format associated with another application. The data structure associated with each application can be identified from the data models of each application stored in the SDK repository 204, and the transformation from one data model to another is based on knowledge of the data structures identified in the SDK repository 204. In some instances, data associated with a first application can be analyzed using tools available from a different application. For example, a social networking application may have networking connections that can be analyzed using a business intelligence application after the metadata transformer 218 has transformed the social data model (Open Social SDK) to a shared object data model. Accordingly, the functionality of certain applications can be expanded or replaced with the functionality provided by other applications.

After the data/metadata has been extracted from an original application and potential connections with other applications are formed, a new UI layout for the data/metadata can be selected from a widget library 224a at the server 202. The widget library 224a contains UI configuration data and visualization components for available UI layouts that can be applied to the data/metadata extracted from the original application. The data extraction framework 104 can attach or bind the visualization components from the widget library 224a to the data/metadata. The UI layouts stored in the widget library 224a can include UI libraries associated with any number of technologies, visualization tools, or application frameworks, such as JavaServer Face (JSF) 228 and Common Visual Object Modeler (CVOM) 230, for example. In some implementations, the particular UI layout selected for binding to the data/metadata can be identified based on consistency with a current user scenario, such as applying a UI layout conforming to the UI layouts associated with other applications present within a shared workspace. In some instances, a widget registry service 226 is included in the widget library 224a to introduce new widgets and/or widget protocols to the widget library 224a.

Further, as depicted in FIGURE 2, the widget library 224a can have a corresponding widget library 224b hosted at the client 250. The widget library 224b at the client 250 can include additional widget libraries for applying different UI layouts. Examples of widget libraries included at the client 250 in the illustrated example are JQuery 231, Flex 232, HTML 233, and other libraries 234. Any of the libraries listed under the widget library 224b, however, can also reside in the widget library 224a at the server 202. In other words, the widget libraries 224a and 224b can include any one of a plurality of widget libraries for the various UI layouts available to data extraction framework 104. In certain instances, the widget library 224a at the server 102 is used to initialize or configure the libraries while the widget library 224b at the client 250 is used to run the UI libraries. Alternatively, different UI technologies may configure the visualization for an application at the server 202 or the client 250 depending on the specific requirements of the UI technology. For example, in some instances, business-oriented widget libraries can be stored in the widget library 224a at the server 202 while consumer-oriented widget libraries are stored in the widget library 224b at the client 250.

The server 202 can also include an index module 240 to facilitate searching functions on the data/metadata extracted from external applications. The incoming data/metadata from the external applications 205 can be sent to an index writer 242, which indexes the data/metadata and stores the indexed data in an index 244 for future searching functions. In certain instances, the index 244 for a particular application can be populated concurrently with the process for storing data models associated with the application in the SDK repository 204. As seen in FIGURE 2, the indexed data can then be searched using a search module 246. In some implementations, a multi-dimensional view module 248 can also provide multi-dimensional views on the extracted data/metadata in connection with searches of the data/metadata. Multi-dimensional views allow a user to view different aspects or layers in a set of data using different views. For example, a user can search for a list of employees working at a particular company. After the search results return the list of employees, the user can identify categories of employees at the company such as all the software developers at the company. Further, the user can then view a different layer of the data set by requesting a view of all software developers in the same city that the company is located in. In the illustrated example, the multi-dimensional view module 248 can automatically build potential multi-dimensional views during a search process by identifying data with common attributes across the data associated with different applications. Accordingly, the index 244 can be used to search the data from different applications, data models, and data sources.

Various components that correspond with certain components at the server 202 can be included at client 250. For example, a mashup module 252 can be implemented to manage the new UI layouts, mashups, and functionality generated at the server 202. In general, the UI components needed to render and display the extracted data/metadata and new functionality to a user can be stored at the mashup module 252 and managed using controller 254. For example, the automatic wiring performed at the federated data model 216 at the server 202 can calculate a set of relationships between applications. The relationships generated at the server 202 can be stored at the server 202 by the metadata mapping application 222. In some implementations, the relationships can also be stored in at the client 250 in the mashup module 252. Accordingly, actions performed at the client 250, such as selection or modification of data items or data objects in one application can be automatically reflected in other applications without round-trip communications to the server 202.

A data model repository 256 can be used to store data models associated with the new UI layouts, data mappings, and data models generated after extracting data/metadata from the original application. In some implementations, modules for enhancing search functions on extracted data/metadata are also included in the mashup module 252. For example, multi-dimensional views on search results are provided by a multi-dimensional view module 258 associated with the client 250. Specific UI components allowing a user to search a set of data and to select different multi-dimensional views of the search results can be presented through the multi-dimensional view module 258. Further, in some instances, filters 260 can be automatically applied to search results to present data most relevant to a user's business context. The mashup module 252 can also include a configuration wizard 262 operable to present UI components that allow a user to enter configuration data or manual changes to UI components.

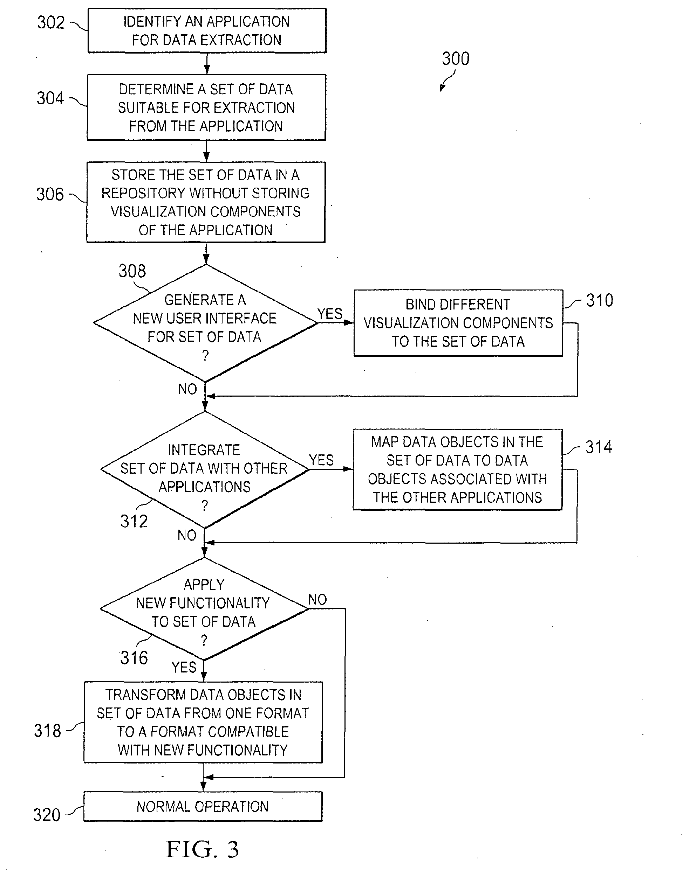

FIGURE 3 illustrates an example process 300 for providing a data extraction framework. First, an application is identified for data extraction at 302. In some instances, the application is identified based on a user selection to add the application to a mashup environment. The mashup environment can include a workspace shared with other applications. Further, the application can be any application containing data that may be used in connection with the other applications. A set of data suitable for extraction from the application is determined at 304. In certain implementations, extracting data from an application can include identifying data/metadata associated with the application that can be separated from the composition layers of the application, including visualization components of the application, and storing the data/metadata separately from the visualization components of the application.

In some implementations, the determination of what data associated with an application is suitable for extraction can be based on the data structure of data in the application identified using the application's software development kit. Accordingly, the set of data in the illustrated example is stored in a repository without storing the visualization components associated with the application in the repository at 306. After the set of data is extracted, it can be sent to other applications or processes for further processing. For example, if it is determined that a new UI is to be generated for the set of data at 308, the set of data can be sent to a process that identifies new visualization components for the set of data (if it is determined that a new UI will not be generated, then the process 300 continues to 312). In some implementations, the visualization components can be selected from a widget library 224 containing visualization components associated with other applications. Further, the visualization components can be selected based on a current user scenario associated with the set of data. The selected visualization components are then bound to the set of data at 310.

If it is determined that the set of data is to be integrated with other applications at 312, then data objects within the set of data are mapped to data objects associated with the other applications at 314. Otherwise, the process 300 continues to 316. The mapping of data objects can include identifying data fields from different applications sharing similar tags or attributes and generating a logical wiring between the data fields. Accordingly, different applications can be wired together in a mashup environment. For example, a business application can be connected to an online map search application in a mashup environment. The business application may include data fields indicating an employee's city of residence, for example, while the online map search application can present geographical information of different cities. In some implementations, the city data fields in the business application can be logically wired to the city geography functionality of the online map search application to form a mapped connection.

The process 300 then determines whether new functionality will be applied to the set of data at 316. If not, the process 300 proceeds to normal application operation at 320. If it is determined that new functionality will be applied to the set of data, data objects in the set of data are transformed from one format to another format compatible with the new functionality at 318. In certain implementations, the new functionality can be functions performed by other applications, such as applications sharing the same workspace of the original application from which the set of data was extracted. Further, the data objects in the set of data can be transformed into a format compatible with the new functionality based on the software development kits associated with the original application and the applications providing the new functionality. Accordingly, if the new functionality is associated with an application having an available software development kit, data objects in the set of data can be transformed into an appropriate format compatible with the new functionality. The process 300 returns to normal application operation at 320.

The preceding figures and accompanying description illustrate example processes and computer implementable techniques. But environment 100 (or its software or other components) contemplates using, implementing, or executing any suitable technique for performing these and other tasks. It will be understood that these processes are for illustration purposes only and that the described or similar techniques may be performed at any appropriate time, including concurrently, individually, or in combination. In addition, many of the steps in these processes may take place simultaneously and/or in different orders than as shown. Moreover, environment 100 may use processes with additional steps, fewer steps, and/or different steps, so long as the methods remain appropriate.

In other words, although this disclosure has been described in terms of certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure.

## Claims

1. A computer implemented method performed by one or more processors for providing a data extraction framework, the method comprising the following operations:
identifying a first application for data extraction;
determining a set of data suitable for extraction from the first application using a software development kit associated with the first application;
storing the set of data in a repository without storing visualization components of the first application in the repository; and
sending the set of data to a second application for further processing of the set of data.

2. The method of Claim 1, wherein the second application is configured to bind different visualization components to the set of data for display of data elements in the set of data to a user;
wherein the different visualization components are optionally identified based on at least one of a current business scenario of the user or current visualization components utilized in another application sharing a workspace with the first application; and
wherein the different visualization components are optionally selected from a widget library, the widget library optionally storing visualization components associated with at least one other application.

3. The method of Claim 1 or 2, wherein the second application is configured to map at least one data object in the set of data to at least one data object associated with another application sharing a workspace with the first application.

4. The method of any one of the preceding Claims, wherein the second application is configured to transform at least one data object in the set of data having a first format associated with the first application into a data object having a second format associated with a different application.

5. The method of any one of the preceding Claims, wherein the second application is configured to index the set of data for further searching of the set of data.

6. The method of any one of the preceding Claims, further comprising identifying common attributes shared by different data objects in the set of data for providing multi-dimensional views of search results of the set of data.

7. The method of any one of the preceding Claims, wherein the first application is identified based on a user selection to include the first application in a workspace shared with at least one other application.

8. A computer program product encoded on a non-transitory, tangible storage medium, the product comprising computer readable instructions for causing one or more processors to perform operations comprising:
identifying a first application for data extraction;
determining a set of data suitable for extraction from the first application using a software development kit associated with the first application;
storing the set of data in a repository without storing visualization components of the first application in the repository; and
sending the set of data to a second application for further processing of the set of data.

9. The computer program product of Claim 8, wherein the second application is configured to bind different visualization components to the set of data for display of data elements in the set of data to a user.

10. The computer program product of Claim 9, wherein the different visualization components are identified based on at least one of a current business scenario of the user or current visualization components utilized in another application sharing a workspace with the first application.

11. The computer program product of any one of Claims 8 to 10, wherein the second application is configured to map at least one data object in the set of data to at least one data object associated with another application sharing a workspace with the first application.

12. The computer program product of any one of Claims 8 to 11, wherein the second application is configured to transform at least one data object in the set of data having a first format associated with the first application into a data object having a second format associated with a different application; the method optionally comprising
applying a function of the different application to the data object having the second format.

13. The computer program product of any one of Claims 8 to 12, wherein the set of data is logically separated from the visualization components of the first application based on the software development kit before storing the set of data in the repository.

14. A system, comprising:
memory operable to store a set of data associated with a first application; and
one or more processors operable to:
identify the first application for data extraction;
determine a set of data suitable for extraction from the first application using a software development kit associated with the first application;
store the set of data in the memory without storing visualization components of the first application in the memory; and
send the set of data to a second application for further processing of the set of data.

15. The system of Claim 14, wherein the second application is configured to perform one or more of the following:
bind different visualization components to the set of data for display of data elements in the set of data to a user;
map at least one data object in the set of data to at least one data object associated with another application sharing a workspace with the first application;
transform at least one data object in the set of data having a first format associated with the first application into a data object having a second format associated with a different application.
